# EUROPEAN PATENT SPECIFICATION

(11) **EP 2 772 389 B1**
(45) Date of publication and mention of the grant of the patent: **29.04.2020**
(21) Application number: 13001807.0
(22) Date of filing: 08.03.2013
(51) Int. Cl.: B60N 2/28

(54) **Child safety seat**
Kindersicherheitssitz
Siège de sécurité enfant

(30) Priority: 28.02.2013 EP 13001024
(43) Date of publication of application: 03.09.2014
(73) Proprietor: Britax Römer Kindersicherheit GmbH, 89340 Leipheim (DE)
(72) Inventor: Frank, Richard, 89275 Elchingen (DE); Powell, Iain, 89077 Ulm (DE); Leese, Gavin Paul, 89081 Ulm (DE); Bendjellal, Farid, 92500 Rueil Malmaison (FR); Lumely, Mike, Grovedale, Victoria (AU); Nagelski, Keith C., Huntersville, NC 28078 (US)
(74) Representative: Bosch Jehle Patentanwaltsgesellschaft mbH

(56) References cited:
- EP-A1- 1 215 077
- EP-A2- 1 759 917
- DE-A1-102004 022 316

## Description

The present invention relates to a child safety seat and, more particularly, to a child safety seat for use in a vehicle, the child safety seat being designed to increase the level of protection provided to a child seated in the child safety seat. In particular, the child safety seat is designed to reduce head excursion of occupant's head experienced during a frontal impact of the vehicle carrying the child safety seat.

Child safety seats are employed for safely transporting children in vehicles, in particular in cars. There is a large variety of child safety seats adapted for transporting children of different age ranges. Exemplarily, document EP 1 215 077 A1 relates to a child safety seat to be installed on the seat of a car, wherein the child safety seat includes a base fixed to a car-side member, and a child seat body mounted on the base. In Europe, a system of groups has been established for categorizing child safety seats. This system ranges from "Group 0" seats suitable for newborn children via "Group 1" and "Group 2" seats up to "Group 3" seats suitable for children up to twelve years old. Based on these basic groups there exist additional groups like "Group 0+" or extended groups like "Group 1-2", "Group 2-3", or "Group 1-2-3". Besides the age of a child, other factors that have to be taken into account when choosing a child safety seat for a specific child include the weight and the height of the child.

In principle, a child safety seat can be mounted in a vehicle in one of two orientations: forward-facing, i.e. in such a way that a child positioned in the child safety seat faces the front of the vehicle carrying the child safety seat; or rear-facing, i.e. in such a way that a child positioned in the child safety seat faces the rear of the vehicle carrying the child safety seat. While it has been recognized that a rear-facing child safety seat offers a certain level of protection, using a rear-facing child safety seat is not always feasible. In particular, once a child's height exceeds a certain value, a forward-facing child safety seat has to be used.

In order to safely secure a child to a child safety seat, adequate fixing means have to be provided. Therefore, a child safety seat often comprises a harness, in particular a five-point harness. Such a five-point harness comprises two shoulder straps, two lap straps, and a crotch strap, all of which come together at a common buckle. Compared to other fixing means such as systems comprising a shield, for example a tray shield or a T-shield, a five-point harness is particularly advantageous for securing a child to a child safety seat since the shoulder straps and the lap straps distribute crash forces at the child's strongest bony structures, i.e. the shoulder straps at the child's shoulders and the lap straps at the child's pelvis. In addition, with a shield system there is always the risk of a part of the child's body, e.g. the child's head, hitting the shield or the interior of the vehicle during a crash of the vehicle.

Furthermore, the forces acting on a child sitting in a child safety seat during a crash of the vehicle carrying the child safety seat are influenced by the way the child safety seat is attached to the vehicle, i.e. by how the child safety seat is fixed to the vehicle seat it is placed on. Generally, there a two systems for fixing a child safety seat on a vehicle seat. The first system employs a seat belt provided in the vehicle for securing the child safety seat. In this system, at least one of the seat belts of the vehicle is guided in a prescribed way around or through the child safety seat thus securing the child safety seat in the desired position and orientation. An advantage of this system is that it exclusively makes use of fastening means that are usually present in every vehicle, i.e. the seat belts of the vehicle. Securing a child safety seat with a vehicle seat belt may, however, be cumbersome. Therefore, in practice, many child safety seats of this type are improperly installed in the vehicle. The second system employs fixing means which are provided in the vehicle specifically for securing a child safety seat. In Europe, the ISOFIX system has been introduced for this purpose. A vehicle seat adapted for installation of an ISOFIX child safety seat comprises anchorage (ISOFIX anchorage) which are provided at the lower end of the seat's seatback and are fixedly attached to the seat. The child safety seat comprises latches (ISOFIX latches) which can be releasably coupled to the anchorages. Consequently, using the ISOFIX system a child safety seat can be easily and safely fixed to a vehicle seat.

The primary object of a child safety seat is to protect a child from experiencing injuries if the vehicle carrying the child safety seat is involved in an accident. Since car accidents involving a frontal impact are very common, protection of the child during a frontal impact is especially important. Achieving this goal is particularly challenging due to the specifics of the child's anatomy. In particular, in the body of a child the ratio of the head's mass to the body's mass is much higher than in the body of an adult. At the age of five months, for example, a child's head constitutes about one fourth of the child's mass. Therefore, due to its high mass, a large part of the forces acting on a child during an impact is actually acting on the child's head. Consequently, in a frontal impact of a vehicle carrying a forward-facing child safety seat, the head of the child tends to be displaced in the forward direction relative to the child safety seat. This head displacement is often referred to as head excursion. If the amount of head excursion is not sufficiently controlled by the child safety seat, a child sitting in the child safety seat may suffer from severe injuries to its head, in particular if the child's head contacts a rigid object such as the seatback of the vehicle seat positioned in front of the child safety seat. But even in cases where the child's head does not impact on a rigid object during the crash, the forces acting on the child's head during the crash can result in injuries, in particular in injuries of the child's neck.

Therefore, it is an object of the present invention to provide a child safety seat which minimizes the head excursion experienced by a child sitting in the child safety seat during a frontal impact of the vehicle carrying the child safety seat and to reduce the forces acting on the child's body, in particular on the child's head, neck and/or chest, during a crash of the vehicle.

This object is solved by the child safety seat for use in a vehicle in accordance with the invention with the features of claim 1 and 16. Advantageous embodiments of the present invention are indicated in subclaims 2 to 15 and 18.

The child safety seat for use in a vehicle in accordance with the invention comprises a seat member which is configured to hold a child, a base member which is adapted to be attached to a seat of the vehicle, and a locking device, wherein the seat member is movably mounted to the base member in such a way to allow the seat member to be transferred from an initial position to a collapsed position by moving the seat member towards the base member and in such a way that crash-induced forces acting on the child safety seat during a frontal collision of the vehicle tend to transfer the seat member from the initial position to the collapsed position, wherein the locking device is configured to lock the seat member in the initial position and wherein the locking device is designed and arranged to release the seat member from the initial position if the crash-induced forces reach or exceed a given threshold value.

With the locking device specified above, the seat member of the child safety seat can be locked in the initial position in order to employ the child safety seat for transport of a child.

The present invention mainly, but not exclusively, relates to "Group 1" seats, i.e. child safety seats for children with an age in the range from about nine months to about four years and with a weight in the range from about 9 kg to about 18 kg. Children in this age range have learnt to sit up themselves, making the initial position the adequate position for transporting a child in a child safety seat. Preferably, the child safety seat is configured to allow the seat member's orientation to be adjusted if the seat member is locked in the initial position. In this way the seat member can, even if locked in the initial position, adopt a reclined position allowing relaxed travel.

The seat member, however, is not kept in the initial position by the locking device under all circumstances. In particular, the locking device is designed to allow transfer of the seat member from the initial position to the collapsed position if forces urging the seat member from the initial position to the collapsed position reach or exceed a given threshold value. When a vehicle carrying the child safety seat in accordance with the invention is involved in a crash, crash-induced forces will act on the child safety seat. The way the child safety seat of the invention is designed, these crash-induced forces tend to displace the seat member towards the base member. Such a displacement would result in a transfer of the seat member from the initial position to the collapsed position. Since the locking device is designed and arranged to release the seat member from the initial position if the crash-induced forces reach or exceed a given threshold value, under normal circumstances, i.e. during undisturbed travel of the vehicle carrying the child safety seat or in an insignificant accident, the seat member will always remain in the initial position. Only if the vehicle has a severe accident, the seat member will be automatically transferred from the initial position to the collapsed position. Consequently, the locking device is designed and arranged to ensure that the seat member is transferred from the initial position to the collapsed position if and only if the crash-induced forces reach or exceed a given threshold value. Therefore, the seat member will be automatically transferred to the collapsed position if the vehicle has a serious accident with a frontal impact.

Advantageously, during transfer of the seat member from the initial position to the collapsed position the seat member is displaced downwards and towards the back of the vehicle carrying the child safety seat. Such a displacement of the seat member will at least partly counter the dynamic rotational forces acting on a child during a frontal impact of the vehicle, resulting in improved crash behaviour of the child safety seat. In particular, such a displacement of the seat member will reduce head excursion experienced by a child sitting in the child safety seat in the course of a frontal impact.

Preferably, the seat member is pivotally mounted to the base member by a first joint. The seat member is then adapted to be pivoted relative to the base member about the first joint. In particular, the seat member is adapted to be pivoted towards the base member as the seat member is transferred from the initial position to the collapsed position. If the seat member is pivotally mounted to the base member, the characteristics of the transfer of the seat member from the initial position to the collapsed position can be easily configured. In another preferred embodiment of the invention, the seat member is slidably mounted to the base member. The seat member may also be pivotally and slidably mounted to the base member.

Advantageously, the child safety seat is configured for forward-facing installation in the vehicle and the seat member is configured to be pivoted towards the base member about an axis which is located in the front half of the base member. This location of the pivot axis allows the seat member to be displaced downwards and towards the back of the vehicle in a single simple motion, i.e. by a single rotation about the pivot axis. Therefore, with such a child safety seat, the desired displacement of the seat member as a result of a frontal impact can be reliably achieved.

Preferably, the child safety seat of the invention furthermore comprises a deformable energy absorbing element which is arranged to be deformed when the seat member is transferred from the initial position to the collapsed position. Deformation of the deformable energy absorbing element in the course of the transfer of the seat member from the initial position to the collapsed position will absorb energy. In particular, kinetic energy will be extracted from the motion of the seat member resulting in a deceleration of the seat member. Therefore, the transfer of the seat member from the initial position to the collapsed position will be dampened. This further improves the crash behaviour of the child safety seat. Preferably, the deformable energy absorbing member is arranged in a space located between the seat member and the base member.

Advantageously, the deformable energy absorbing member comprises a honeycomb structure. Using a honeycomb structure, a light but structurally stable energy absorbing member can be constructed. Furthermore, the honeycomb structure will ensure that energy will be absorbed continually as the deformable energy absorbing member is being deformed.

In the child safety seat of the invention the base member preferably comprises a lower part and an upper part and the seat member preferably comprises a backrest, wherein the backrest of the seat member is slidably coupled to the upper part of the base member by a second joint. By providing the base member with an upper part to which the backrest of the seat member is coupled, the structural stability of the seat member can be improved. This is particularly advantageous since in the course of a frontal impact considerable forces will be exerted on the harness securing the child to the child safety seat. This harness is usually attached to the backrest of the child safety seat. Therefore, the backrest of the child safety seat will receive a considerable load in the course of a frontal impact. To safely secure the child, however, the backrest has to withstand this load. Coupling the backrest to the upper part of the base member will reinforce the backrest. By slidably coupling the back of the seat shell member to the upper part of the base member by a second joint, transferability of the seat member from the initial position to the collapsed position can be maintained.

The locking device preferably comprises a first component and a second component which are configured to be moveable relative to each other. With such a locking device the desired functionality of the locking device can be achieved by configuring the way the two components can be moved relative to each other. In particular, it might be advantageous to design the two components in such a way that the force required to move the second component relative to the first component depends on the position of the second component relative to the first component.

In the child seat in accordance with the invention, the locking device is preferably configured to adopt one of two distinct configurations, a first configuration or a second configuration, wherein in the first configuration the second component is configured to adopt a first position relative to the first component and in the second configuration the second component is configured to adopt a second position relative to the first component, wherein the locking device adopts the first configuration when the seat member is in the initial position and wherein the locking device adopts the second configuration when the seat member is in the collapsed position. The first configuration of the locking device therefore corresponds to the seat member being in the initial position, whereas the second configuration of the locking device corresponds to the seat member being in the collapsed position. Preferably, the locking device is designed to be locked in the first configuration. Transfer of the locking device from the first configuration to the second configuration then requires given forces to be exerted on the first component and on the second component. The locking device is advantageously designed in such a way that forces acting on the locking device during normal operation of the child safety seat, i.e. while the child safety seat is not involved in a serious accident, do not suffice to transfer the locking device from the first configuration to the second configuration. Once the locking device has been brought into the first configuration, the locking device will therefore remain in the first configuration unless forced into the second configuration.

The first component of the locking device preferably comprises an elongate recess or an elongate slot. The second component of the locking device preferably comprises a projection, advantageously in the form of a pin, configured to be inserted into the elongate recess or the elongate slot of the first component. The elongate recess or the elongate slot advantageously exhibits varying dimensions. In particular, the elongate slot preferably exhibits a varying width and the elongate recess preferably exhibits a varying width or a varying depth or both. One end of the elongate slot, for instance, could be widened, in particular into a circular opening, whereas the rest of the elongate slot could have an essentially constant width smaller than the diameter of the circular opening. The width of the projection of the second component then preferably matches the diameter of the circular opening. The projection could then be easily inserted into the circular opening. Since the width of the elongate slot is smaller than the diameter of the circular opening, the projection of the second component would be locked in the circular opening. This corresponds to the first configuration of the locking device. To transfer the locking device into the second configuration, the projection of the second component is forced into the narrow section of the elongate slot. Since the narrow section of the elongate slot is less wide than the projection of the second component, this requires application of given forces to the first and second components. When the projection has been forced from the circular opening into the narrow section of the elongate slot, the locking device adopts the second configuration.

If the first component comprises an elongate recess of varying depth, the depth of the recess is preferably configured to decrease from one end of the elongate recess to the other end of the elongate recess. Consequently, the depth of the elongate recess will be the deepest at one of its ends. Advantageously, the protrusion of the second component is then configured to reach down to the base of the recess when the protrusion of the second component is located near the corresponding end of the elongate recess. This arrangement of the first and second components corresponds to the first configuration of the locking device. To move the second component along the elongate recess away from its deep end, the protrusion of the second component has to be forced into the section of the elongate recess that is less deep. In doing so, the protrusion will be pressed against the base of the recess, thus generating friction. By adjusting the depth of the elongate recess and/or the length of the protrusion, the amount of friction and therefore the force required to push the protrusion along the recess can be controlled. When the projection has been forced from the deep end of the elongate slot into the section of the elongate slot that is less deep, the locking device adopts the second configuration.

In the child safety seat of the invention, the first component of the locking device is preferably fixedly attached to the seat member and the second component of the locking device is preferably fixedly attached to the base member. Movement of the seat member relative to the base member will then automatically result in a movement of the first component of the locking device relative to the second component of the locking device. Therefore, with such an arrangement of the components of the locking device, there is no need for an additional mechanism translating a movement of the seat member relative to the base member into a movement of the first component relative to the second component. By controlling the mobility of the first component relative to the second component, the mobility of the seat member relative to the base member can be directly and easily controlled. This allows direct configuration of the characteristics of the transfer of the seat member from the initial position to the collapsed position.

The base member of the child safety seat in accordance with the invention preferably comprises a pivotable element configured to be pivoted about an articulated joint provided in the base member. Advantageously, the first joint is then provided on the pivotable element.

The pivotable element provided in the base member results in an additional degree of freedom for designing the characteristics of the transfer of the seat member from the initial position to the collapsed position. When the seat member is pivotally attached to the pivotable element of the base member, the seat member can be rotated about to axes of rotation during the transfer from the initial position to the collapsed position. The first axis is defined by the first joint and the second axis is defined by the articulated joint. By adjusting the dimensions of the pivotable element, the distance between these to axes can be adjusted. This will influence the kinematics of the transfer of the seat member from the initial position to the collapsed position. The pivotable element of the base is preferably arranged in such a way that during the transfer of the seat member from the initial position to the collapsed position the seat member is pivoted about the first joint towards the pivotable element and, advantageously simultaneously, the pivotable element is pivoted downwards about the articulated joint. In this way, the seat member can be pushed downwards while being simultaneously rotated backwards during the transfer into the collapsed position.

When the base member of the child safety seat of the invention comprises a pivotable element, the first component of the locking device is preferably fixedly attached to the seat member and the second component of the locking device is preferably fixedly attached to the pivotable element. The locking device is then configured to lock the seat member in relation to the pivotable element of the base member. Even if the relative position of these two components is locked by the locking device, the pivotable element itself, however, may be free to be rotated. This rotational degree of freedom can be used to allow the seat member to be brought into a reclined position. Preferably, the seat member can be reclined by rotating the seat member together with the pivotable element about the articulated joint.

In the child safety seat of the invention, the first joint, the second joint, the pivotable element, and the articulated joint are preferably arranged and designed to guide the seat member during the transfer from the initial position to the collapsed position in such a way that the seat member is lowered and rotated towards the back of the vehicle. By adjusting the positions of these joints and the shape of the pivotable element, the kinematics of the transfer of the seat member from the initial position to the collapsed position can be freely configured. Since there are several components that can be adjusted, adapting the characteristics of the collapse of the seat member to specific needs is particularly easy. As a result, the child safety seat of the invention can be designed to reliably reduce head excursion.

In the child safety seat of the invention, transfer of the seat member from the initial position to the collapsed position is preferably configured to be triggered by actuation of a seat belt provided in the vehicle. With such a child safety seat it is possible to make use of the crash sensors provided in modern vehicles. A modern vehicle typically comprises belt pretensioners that are used to pre-tension the safety belts of the vehicle if the vehicle is involved in a serious accident. The crash sensors of the vehicle are configured to recognize such a serious accident. If the crash sensors signalize a crash, a control logic of the vehicle will activate the belt pretensioners of the vehicle. The belt pretensioners will then tension the seat belts by applying a retraction force to the seat belts. With the child safety seat according to a preferred embodiment of the invention this force applied to a seat belt by a belt pretensioner can be used e.g. by means of a sensor located in the child safety seat to trigger the transfer of the seat member from the initial position to the collapsed position. As a result, crash sensors of a vehicle detecting the occurrence of a crash will indirectly also trigger the transfer of the seat member from the initial position to the collapsed position. This is particularly advantageous since the crash sensors are usually specifically designed for each model of a vehicle and adapted to the crash behaviour of this model. Crash sensors of a vehicle can therefore detect a crash more reliably than an exclusively mechanical system of a child safety seat.

The child safety seat of the invention preferably comprises coupling means configured for releasable attachment of a portion of the seat belt to the coupling means, wherein the locking device is configured to adopt a locking position locking the seat member in the initial position or a release position allowing transfer of the seat member from the initial position to the collapsed position, wherein transfer of the locking device from the locking position to the release position is configured to be triggered by the seat belt exerting a force on the coupling means, the force being applied to the seat belt by a seat belt pretensioner of the vehicle. When the locking device of this child safety seat is in the locking position, the seat member is preferably fixedly locked in the initial position. Regardless of the forces acting on the seat member, the seat member will then stay in the initial position. In order to transfer the seat member to the collapsed position, the locking device has first to be brought to the release position. After the locking device has been brought into the release position, the seat member is free to collapse into the collapsed position. Since transfer of the locking device from the locking position to the release position is configured to be triggered by the seat belt pretensioner, use can again be made of the information provided by crash sensors of the vehicle. If the crash sensors detect a crash they will initiate tensioning of the vehicle's seat belts by exerting a force to the seat belts. If one of the seat belts is coupled to the coupling means of the child safety seat, the force applied to this seat belt by a belt pretensioner can be transferred to the coupling means. This force can then be used to trigger the transfer of the locking device from the locking position to the release position. The child safety seat of the invention preferably comprises biasing means, such as a spring, configured to bias the seat member from the initial position to the collapsed position. When the locking device is in the locking position, the biasing means are prevented from transferring the seat member from the initial position to the collapsed position. When the locking device is in the release position, however, the biasing means are free to transfer the seat member to the collapsed position.

According to another aspect of the present invention, a child safety seat for use in a vehicle, the child safety seat comprises a seat member configured to hold a child, a base member adapted to be attached to a seat of the vehicle, and a locking device, wherein the seat member is movably mounted to the base member in such a way to allow the seat member to be transferred from an initial position to a collapsed position by moving the seat member relative to the base member and in such a way that crash-induced forces acting on the child safety seat during a frontal collision of the vehicle tend to transfer the seat member from the initial position to the collapsed position, upon receiving a predefined signal from a belt pretensioner.

Preferably, sensors are implemented to detect the seat belt movement induced by the pretensioner. These sensors may utilize optical and/or mechanical and/or electronic and/or wire/wireless functionality to detect a seat belt movement.

Preferably, in connection with a sensor or by itself, the movement of the seat belt can be detected by a component to which the seat belt is firmly attached. Such a component may be located at the back of the child safety seat, e.g. in one of the upper corners. The component could utilize a clip to which the seat belt could be attached by means of mechanical or magnetic elements. Once the pretensioner of the seat belt would pre tension the seat belt, a predefined length of the seat belt would be retracted to tighten the seat belt. Due to the firm connection of the seat belt to the component, the retraction of that predefined length of the seat belt will cause to move the component. The move of the component may immediately activate the change of position of the seat from an initial position to a collapsed position. There may not be the need for another sensor.

In addition to moving the seat from an initial position to a collapsed position which offers better protection to the child by reducing for instance the head excursion and loads exerted on its body, energy that will be distributed to the seat is being absorbed by energy absorbing elements located in the seat and/or the seat base and/or seat fixation areas.

In the child safety seat of the invention, the base member preferably comprises a latch adapted for releasable attachment of the child safety seat to an anchorage provided in the vehicle. Preferably, the latch is an ISOFIX latch and the anchorage is an ISOFIX anchorage. In addition, a tether is provided to attach the upper part of the seat. By providing the base member of the child safety seat with such an anchorage, secure attachment of the child safety seat to one of the seats of the vehicle can be achieved. This attachment is particularly advantageous since a securely attached child safety seat cannot slide forwards on the vehicle seat during a frontal impact. The risk of a child colliding with an object positioned in front of the child safety seat, such as the backrest of a vehicle seat positioned in front of the vehicle seat the child safety seat is installed on, can thus be further reduced. Generally, by ensuring that a frontal impact will not make the child safety seat slide forwards, head excursion experienced by a child sitting in the child safety seat during the impact can be reduced. When the child safety seat is secured to a vehicle with a seat belt of the vehicle, there is always a risk that the child safety seat is not properly installed or even if properly installed still is not securely fixed to the seat of the vehicle. Therefore, it might be advantageous not to secure the child safety seat to a vehicle seat by means of a seat belt provided in the vehicle but to use the ISOFIX attachment and the top tether provided on the base member of the child safety seat and an anchorage provided in the vehicle. As the seat belt is not used, it is advantageous to use it for instance for sensing when the pretensioner will be activated.

Specific embodiments of the invention will now be described by way of example and with reference to the accompanying drawings, in which:
Figure 1a is a side view of a first embodiment of a child safety seat in accordance with the invention, wherein the seat member is in the initial position;
Figure 1b is a side view of the child safety seat of Figure 1a, wherein the seat member is in the collapsed position;
Figure 2a is a side view of a second embodiment of a child safety seat in accordance with the invention, wherein the base member comprises a pivotable element and the seat member is in the initial position;
Figure 2b is a side view of the child safety seat of Figure 2a, wherein the seat member is in the collapsed position;
Figure 3a is a side view of a portion of a child safety seat in accordance with a third embodiment of the invention, wherein the seat member is in the initial position;
Figure 3b is a side view of the portion of the child safety seat of Figure 3a, wherein the seat member is in the collapsed position;
Figure 4 is a detailed perspective view of the portion of the child safety seat of Figure 3a showing the locking device;
Figure 5 is a detailed side view of the locking device of Figure 4;
Figure 6a is a side view of a fourth embodiment of a child safety seat in accordance with the invention, wherein the seat member is in the initial position and the transfer of the seat member from the initial position to the collapsed position is configured to be initiated by action of a seat belt;
Figure 6b is a side view of the child safety seat of Figure 6a, wherein the seat member is in the collapsed position.
Figure 7a is a side view of a fifth embodiment of a child safety seat in accordance with the invention, wherein the seat member is in the initial position;
Figure 7b is a side view of the child safety seat of Figure 7a, wherein the pretensioner was activated and activated the transfer of the seat member from the initial position to the collapsed position;
Figure 7c is a detailed view of the coupling component and the detecting element of Figure 7a.

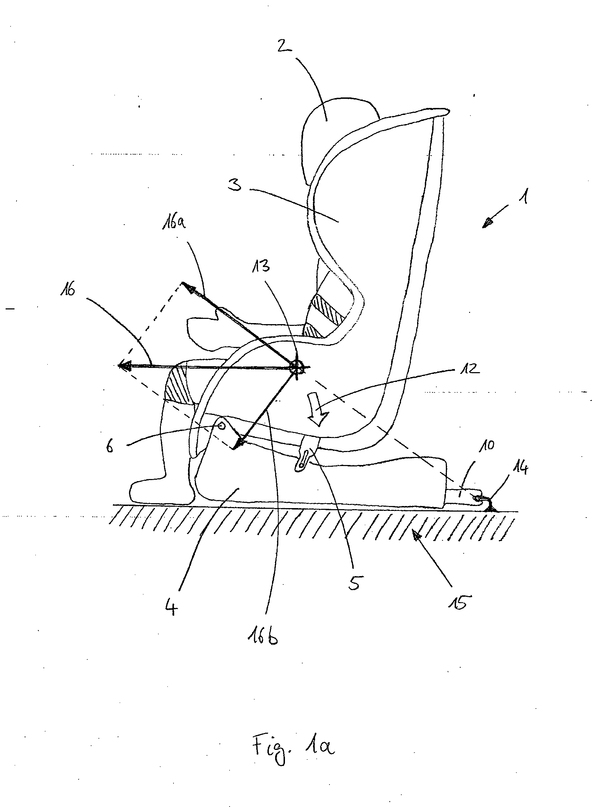

Figure 1a shows a child safety seat 1 for use in a vehicle in accordance with a first embodiment of the invention. The child safety seat 1 comprises a seat member 3 which is configured to hold a child 2 and a base member 4 which is adapted to be attached to a seat 15 of the vehicle. The seat 15 of the vehicle is schematically depicted in Figure 1a and comprises two ISOFIX anchorages 14, only one of them being shown in Figure 1a. The base member 4 comprises two ISOFIX latches 10 configured to be coupled to the ISOFIX anchorages 14. Figure 1a shows one ISOFIX latch 10 which is coupled to an ISOFIX anchorage 14. The seat member 3 is pivotally coupled to the base member 4 by a first joint 6. The first joint 6 is positioned in a front upper part of the base member 4 and in a front lower part of the seat member 3. The child safety seat 1 furthermore comprises a locking device 5 which is positioned between the seat member 3 and the base member 4. The locking device 5 is configured to hold the seat member 3 in the initial position shown in Figure 1a.

Figure 1a furthermore shows the center of mass 13 of the system consisting of the child 2 and the seat member 3. The exact location of the center of mass 13 will depend on the weight distribution of the seat member 3 and of the child 2 and therefore will not always be exactly in the location shown in Figure 1a. As will be appreciated by a person skilled in the art, the exact location of the center of mass 13 is not important for the child safety seat 1 of the invention to function, i.e. for having the seat member 3 automatically transferred from the initial position to a collapsed position in a frontal impact of the vehicle carrying the child safety seat 1. It is, however, advantageous for the invention, that the center of mass is lower in the collapsed position than in the initial position for the sake of reducing the head excursion in case of an frontal accident. How the mechanism transferring the seat member 3 from its initial position to its collapsed position in a frontal impact works will be described in the following paragraphs.

If the vehicle carrying the child safety seat 1 is involved in an accident with a frontal impact, the vehicle will be suddenly decelerated. This sudden deceleration is transferred via the vehicle seat 15, the ISOFIX anchorages 14 and the ISOFIX latches 10 to the base member 4 and to the seat member 3, i.e. to the child safety seat 1. Finally, the deceleration resulting from the frontal impact is transferred from the seat member 3 to the child 2 via fixing means provided for retaining the child 2 in the child safety seat 1, i.e. for instance by a harness (not shown in Figure 1a). The deceleration experienced by the child 2 and by the child safety seat 1 during a frontal impact is equivalent to a force acting on the child 2 and on the child safety seat 1. Regarding the system consisting of child 2 and seat member 3, this force will act on the center of mass 13 of this system. In a frontal impact, the decelerating force transferred from the vehicle seat 15 to the base 4 of the child safety seat 1 will be directed towards the rear of the vehicle, i.e. in a frontal impact there will be a force pulling the base 4 backwards, resulting in a deceleration of the base member 4. From a kinetic and dynamic point of view, this is equivalent to leaving the base member 4 at rest and having a force directed towards the front of the vehicle act on the center of mass 13. This force will accelerate the seat member 3 and the child 2 in a forward direction. Consequently, in a frontal impact resulting in a sudden deceleration of the vehicle, the center of mass 13 can be considered to experience a force 16 directed towards the front of the vehicle. This force 16 is indicated in Figure 1a.

The force 16 acting on the center of mass 13 tends to move the child 2 and the child safety seat 1 in a forward direction relative to the vehicle seat 15. This force 16 can be split into two components, i.e. in a first component 16a and into a second component 16b. The first component 16a is directed parallel to the line connecting the point of connection of the ISOFIX latch 10 to the ISOFIX anchorage 14 to the center of mass 13. Since the base member 4 is fixedly attached to the ISOFIX anchorages 14 via the ISOFIX latches 10 and the seat member 3 is fixedly attached to the base member 4 via the first joint 6 and the locking device 5, the first component 16a of the force 16 cannot shift the position of the center of mass 13. In other words, the first component 16a of the force 16 pulls on the center of mass 13 in the direction indicated by arrow 16a, but due to the way the child safety seat 1 is constructed and attached to the vehicle seat 15, this pulling force cannot result in a dislocation of the center of mass 13. The second component 16b of the force 16 is perpendicular to the first component 16a. As shown in Figure 1a, the second component 16b is mainly directed downwards and a little towards the front of the child safety seat 1. Therefore, the second component 16b generates a torque acting on the seat member 3 and tending to pivot the seat member 3 about the first joint 6 towards the base member 4. This torque generated by the second component 16b of the force 16 is counteracted by the base member 4 which firmly rests on the vehicle seat 15 and by the locking device 5. Therefore, the seat member 3 will remain in the initial position shown in Figure 1a unless the second component 16b of the force 16 and therefore the torque exceeds a given value. If the second component 16b exceeds this given value, the locking device 5 will give way and the torque acting on the seat member 3 will pivot the seat member 3 towards the base member 4 about the first joint 6. Therefore, the seat member 3 will be transferred from the initial position shown in Figure 1a to a collapsed position in the direction indicated by arrow 12.

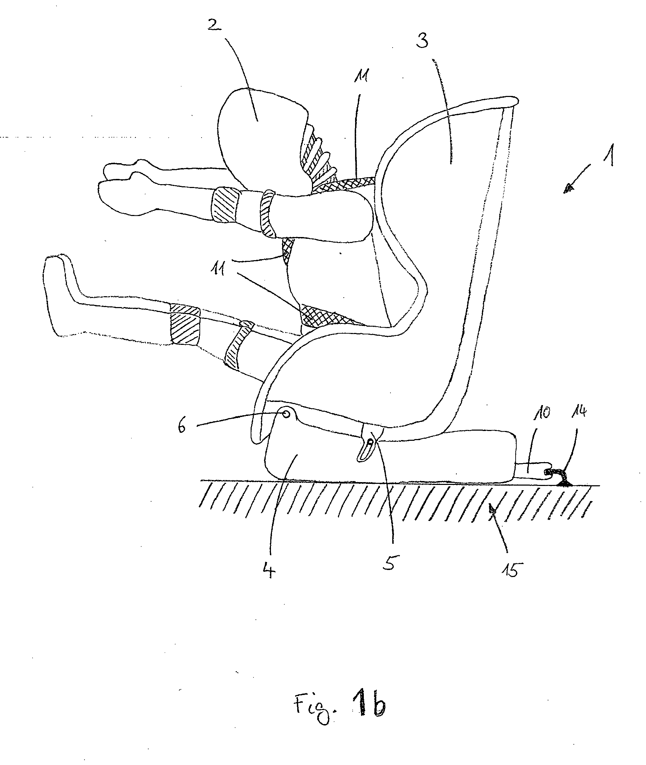

This situation is shown in Figure 1b. Here, the seat member 3 has been transferred from the initial position shown in Figure 1a to a collapsed position. This has been effected by rotating the seat member 3 in the clockwise direction about the first joint 6 relative to the base member 4. In addition, due to the forces acting on the child 2 as a result of the frontal impact, the child 2 has been thrown forwards into the harness 11 securing the child 2 in the child safety seat 1. Consequently, the child's 2 body, in particular the child's 2 head, has been displaced in a forward direction relative to the child safety seat 1. In other words, the child's 2 torso and the child's head have rotated in a counter-clockwise direction. This rotation of the child's 2 body in the counter-clockwise direction is countered by the rotation of the seat member 3 in the clockwise direction. Therefore, the collapse of the seat member 3 from its initial position to its collapsed position reduces the head excursion experienced by the child 2 during a frontal impact.

Advantageously, the child safety seat 1 furthermore comprises means for stabilizing the position of the seat member 4 relative to the chassis of the vehicle carrying the child safety seat 1, such as a foot prop (not shown in the Figures). Preferable, the foot prop is attached to the base member 4 and is configured to reach down to the floor of the vehicle in front of the vehicle seat 15. The foot prop will then prevent the base member 4 from diving into the vehicle seat 15 in the course of a frontal collision of the vehicle. As a result, the transfer of the seat member 3 from the initial position to the collapsed position in accordance with the invention will be stimulated.

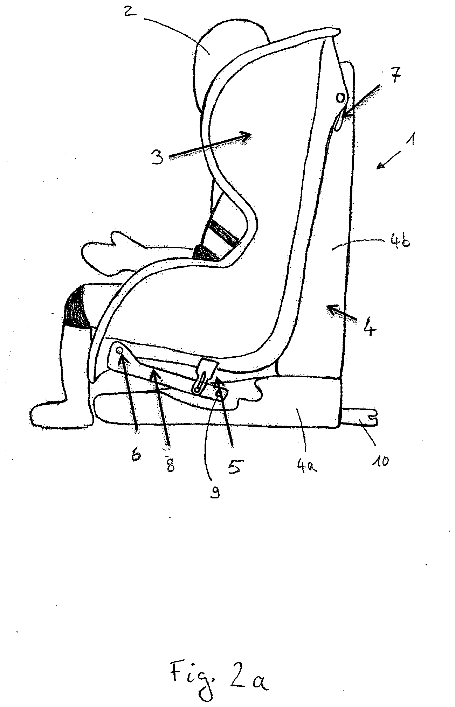

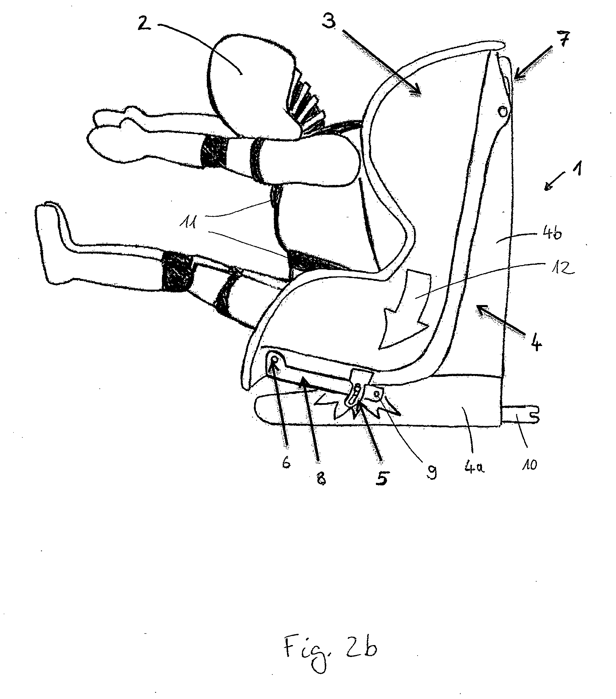

Figures 2a and 2b show a child safety seat 1 for use in a vehicle in accordance with a second embodiment of the invention. This child safety seat 1 is similar to the child safety seat 1 of Figures 1a and 1b. The base member 4 of the child safety seat 1 of Figures 2a and 2b, however, differs from the base member 4 of the child safety seat 1 of Figures 1 a and 1b. In particular, the base member 4 of the child safety seat 1 of Figures 2a and 2b comprises a lower part 4a and an upper part 4b and a pivotable element 8 fixed to an articulated joint 9 provided in the lower part 4a of the base member 4. The seat member 3 is coupled to the base member 4 at various locations. Firstly, the seat member 3 is pivotally coupled to the pivotable element 8 by a first joint 6. The first joint 6 is positioned in an area near the front end of the pivotable element 8 and in a front lower part of the seat member 3. Secondly, the seat member 3 is slidably coupled to the upper part 4b of the base member 4 at a second joint 7. The second joint 7 is located near the top of the upper part 4b of the base member 4 and comprises a slightly curved slot provided in the upper part 4b of the base member 4b and a pin provided in a rear upper area of the seat member 3 and inserted into the slightly curved slot in order to be guided therein. The locking device 5 is attached to the seat member 3 and to the pivotable element 8.

The forces acting on the child 2 and on the child safety seat 1 during a frontal impact resemble those described in connection with Figures 1a and 1 b. The second component 16b of the force 16 (not shown in Figure 2a) will again push the child 2 and the seat member 3 down towards the base member 4 which rests firmly on the vehicle seat 15 (not shown in Figure 2a). Unless the value of the second component 16b of the force 16 exceeds a given threshold value, the locking device 5 will prevent transfer of the seat member 3 from the initial position shown in Figure 2a to the collapsed position, i.e. the locking device 5 will hold the seat member 3 in the initial position. If, however, the value of the second component 16b of the force 16 exceeds the given threshold value, the seat member 3 will collapse from the initial position to the collapsed position shown in Figure 2b.

During this collapse, the first joint 6, the second joint 7, and the articulated joint 9 guide the seat member 3 in the direction indicated by arrow 12 in Figure 2b. The pin of the second joint 7 slides downward in the slightly curved slot provided in the upper part 4b of the base member 4. Furthermore, the seat member 3 is rotated about the first joint 6 towards the pivotable element 8. In addition, the pivotable element 8 is rotated about the articulated joint 9 towards the lower part 4a of the base member 4. As a result, the seat member 3 is pushed down towards the vehicle seat 15 and is slightly rotated in the clockwise direction. This displacement of the seat member 3 counteracts the displacement of the child 2 experienced in a frontal collision and therefore reduces head excursion.

By providing a second joint 7 for attachment of an upper part of the seat member 3 to the base member 4 the structural stability of the seat member 3 can be improved. Since the forces acting on the child safety seat 1 during a frontal collision can be significant, this improved structural stability is of particular importance. Furthermore, by providing a pivotable element 8 in the base member 4 the characteristics of the collapse of the seat member 3 can be systematically configured.

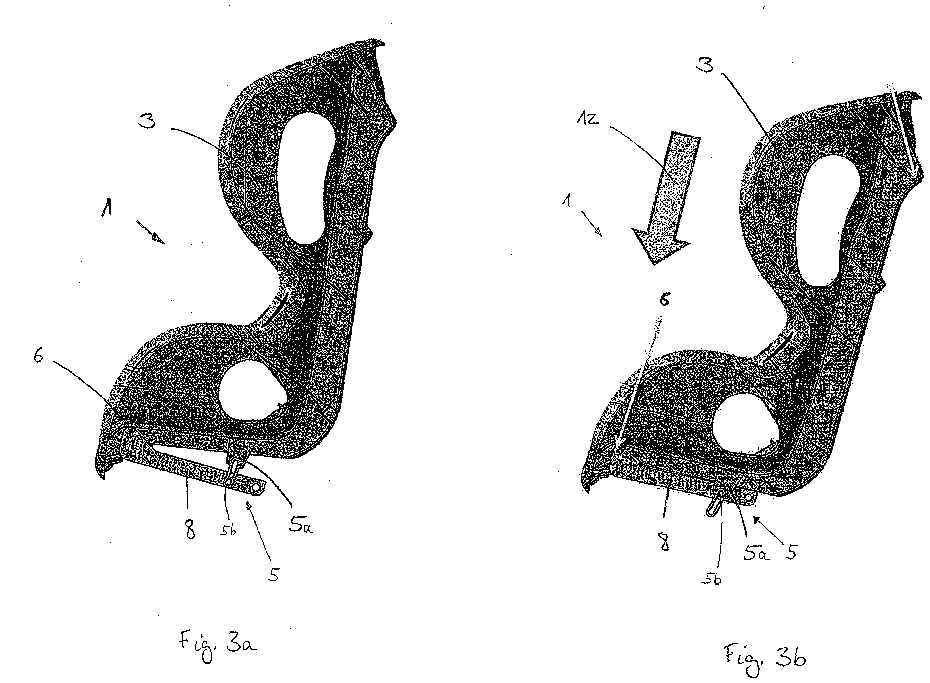

Figure 3a shows the seat member 3, the locking device 5, and the pivotable element 8 of a child safety seat 1 in accordance with a third embodiment of the invention. The seat member 3 is a molded shell made from a synthetic material, such as a thermoplastic polymer. The pivotable element 8 is an elongate arm which is pivotally connected to the seat member 3 by a first joint 6. The first joint 6 comprises a pin provided on the seat member 3 and a hole provided on the pivotable element 8, wherein the pin is positioned inside the hole. The locking device 5 comprises two components, i.e. a first component 5a and a second component 5b. The first component 5a is fixedly attached to the seat member 3 and the second component 5b is fixedly attached to the pivotable element 8. The first component 5a is plate-like element comprising an elongate slot. The second component 5b is a pin-like projection which is arranged inside the elongate slot of the first component 5a. The first component 5a is adapted to allow movement of the second component 5b relative to the first component 5a. When the seat member 3 is in the initial position, the second component 5b is located at the lower end of the slot of the first component 5a.

When the seat member 3 is transferred from the initial position to the collapsed position, the second component 5b of the locking device 5 slides from the lower end of the slot of the first component 5a to the upper end of the slot of the first component 5a. The resulting configuration of the child safety seat 1 is shown in Figure 3b. Here, the seat member 3 has been transferred from the initial position to the collapsed position in the direction indicated by arrow 12. As shown in Figure 3b, when the seat member 3 is in the collapsed position, the second component 5b is located at the upper end of the slot of the first component 5a. The seat member 3 has been rotated towards the pivotable element 8 about the first joint 6.

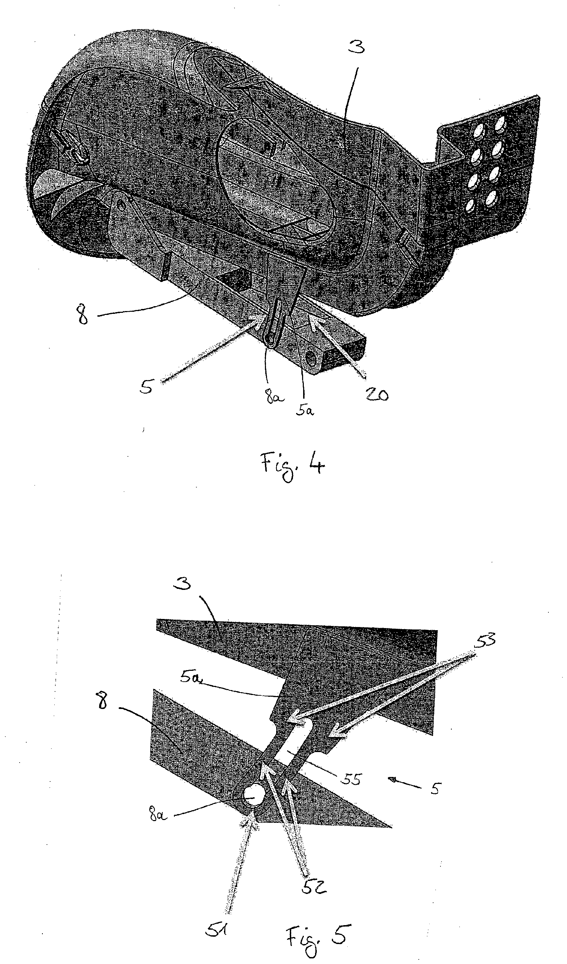

Figure 4 shows a detailed perspective view of a section of the seat member 3 of the child safety seat of Figure 3a, of its pivotable element 8 and of the first component 5a of the locking device 5. The pivotable element 8 comprises a bore 8a intended for insertion of a pin constituting the second component 5b (not shown in Figure 4). Although the second component 5b is not shown in Figure 4, it is evident from the position of the bore 8a relative to the first component 5a that a pin inserted in the bore 8a would be positioned at the lower end of the slot of the first component 5a. Consequently, the seat member 3 is in the initial position. The pivotable element 8 comprises a zone 20 adapted for insertion of an energy absorbing member. The zone 20 is formed as a recess in the pivotable element 8. If an energy absorbing member is inserted in this recess, it will be automatically held in place since it cannot slip off the pivotable element 8. An energy absorbing element located in the zone 20 is positioned in a space provided between the seat member 3 and the pivotable element 8. When the seat member 3 is pivoted towards the pivotable element 8, the volume of this space will decrease. Therefore, an energy absorbing element taking up this space when the seat member 3 is in the initial position will be compressed when the seat member 3 is transferred from the initial position to the collapsed position. The amount of energy absorbed during this compression depends on the shape of the energy absorbing element and the substance it is made from. Advantageously, the energy absorbing member has a honeycomb structure and is made from aluminium. By providing the child safety seat 1 with an energy absorbing member inserted in the zone 20 the transfer of the seat member 3 from the initial position to the collapsed position can be softened.

Figure 5 shows a detailed view of the locking device 5 of Figure 4. The first component 5a of the locking device 5 comprises three zones which enclose the elongate slot 55 provided in the first component 5a of the locking device 5, i.e. a first zone 51, a second zone 52, and a third zone 53. The first zone 51 encloses a lower section of the elongate slot 55, the second zone 52 encloses a middle section of the elongate slot 55, and the third zone 53 encloses an upper section of the elongate slot 55. The wall thickness of the first component 5a encompassing the elongate slot 55 differs from zone to zone: In the second zone 52 the wall thickness is greater than in the first zone 51 and in the third zone 53 the wall thickness is greater than in the second zone 52. In the first zone 51 the elongate slot 55 is widened into a circular opening. The size of this circular opening corresponds to the size of the bore 8a provided in the pivotable element 8 and intended for insertion of a pin constituting the second component 5b (not shown in Figure 5). In the second zone 52 the wall thickness of the first component 5a increases, resulting in a decreased width of the elongate slot 55 since the outer width of the first component 5a remains constant. In the third zone 53 the wall thickness of the first component 5a increases again. But since the outer width of the first component 5a increases too, the width of the elongate slot 55 can be kept constant.

When the seat member 4 is in the initial position, the circular opening of the first component 5a is flush with the bore 8a. Therefore, a pin inserted into the bore 8a will pass right through the circular opening. Since the width of the elongate slot 55 decreases in the second zone 52, the pin cannot slide freely from the first zone 51 into the second zone 52. Therefore, under normal circumstances, i.e. if no exceptional forces act on the child safety seat 1, the seat member 3 is kept in the initial position. Sliding the pin from the first zone 51 into the second zone 52 requires a force that is strong enough to push the walls in the second zone 52 of the first component 5a apart in order to make the elongate slot 55 wide enough for the pin to enter into the second zone 52. Since the wall thickness in the second zone 52 is essentially constant, the force required for moving the pin along the elongate slot 55 also remains essentially constant in the second zone 52. In the third zone 53, however, the wall thickness increases while the width of the elongate slot 55 remains constant. Therefore, the force required to move the pin from the second zone 52 into the third zone 53 once again increases. Since the wall thickness is not increased suddenly but continually, the force is also increased continually. If the pin is pushed along the elongate slot 55 with a constant force, the increased wall thickness in the third zone 53 will therefore lead to a deceleration of the pin. As a consequence, when the seat member 3 collapses from the initial position to the collapsed position, a hard stop of the collapse will be prevented by the increased wall thickness in the third zone 53.

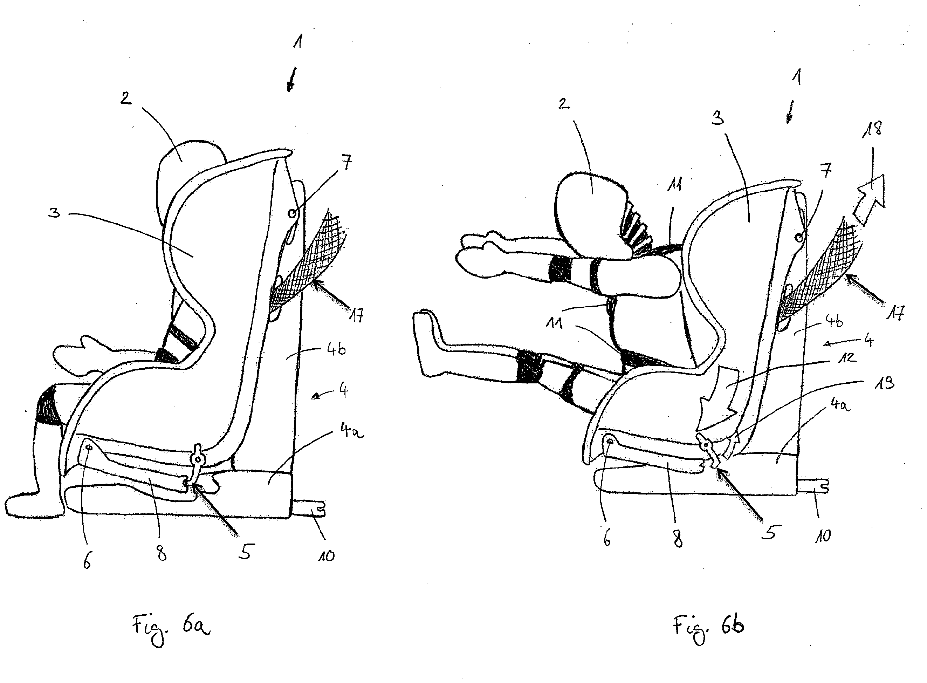

Figures 6a and 6b show a child safety seat 1 in accordance with a fourth embodiment of the invention. While the function of the embodiments described so far is fully mechanical, i.e. the seat member 3 of these embodiments is automatically transferred from the initial position into the collapsed position by crash-induced forces acting on the child safety seat during a frontal impact, the transfer to the collapsed position is externally triggered in the embodiment of Figures 6a and 6b. Preferably, the transfer is triggered by a seat belt pretensioner.

The child safety seat 1 of Figures 6a and 6b closely resembles the child safety seat 1 of Figures 2a and 2b. Therefore, only those components that differentiate the child safety seat 1 of Figures 6a and 6b from the child safety seat 1 of Figures 2a and 2b will be described. In the child safety seat 1 of Figures 6a and 6b the locking device 5 is formed as a catch. The locking device 5 is pivotally mounted to the seat member 3. The locking device 5 can take two positions, a locking position and a release position. In the locking position shown in Figure 6a the locking device 5 interacts with the pivotable element 8 and prevents the seat member 3 from rotating towards the pivotable element 8 about the first joint 6. Therefore, in the locking position the locking device 5 locks the seat member 3 in the initial position. Even if the vehicle carrying the child safety seat 1 is involved in an accident with a frontal impact with considerable forces acting on the child safety seat 1, the seat member 3 will not be transferred from the initial position to the collapsed position if the locking device 5 is in the locking position.

To allow collapse of the seat member 3 to the collapsed position, the locking device 5 has to be brought from the locking position to the release position. This is achieved by means of a seat belt pretensioner provided in the vehicle carrying the child safety seat 1. To this end, the upper part 4b of the base member 4 of the child safety seat 1 comprises an opening adapted for insertion of a seat belt 17 of the vehicle. Advantageously, the child safety seat 1 comprises coupling means configured for releasable attachment of a portion of the seat belt 17 to the coupling means (not shown in Figure 6a). Preferably, the coupling means comprise a buckle configured for receiving the tongue of a belt lock provided on the seat belt 17. The coupling means are linked to the locking device 5 in such a way that by exerting a force on the coupling means the locking device 5 can be brought from the locking position to the release position. The seat belt 17, in turn, is preferably attachable to the coupling means in such a way that the force acting on the coupling means for transfer of the locking device 5 from the locking position to the release position can be exerted by the seat belt 17. As a consequence, when the seat belt 17 is pulled with a sufficient force, this force will be transferred to the coupling means resulting in the locking device 5 being brought from the locking position to the release position. The seat member 3 is then free to collapse into the collapsed position. Preferably, the force acting on the seat belt 17 is exerted by a seat belt pretensioner provided in the vehicle carrying the child safety seat 1.

Figure 6b shows the child safety seat 1 of Figure 6a after the seat member 3 has been transferred from the initial position to the collapsed position. This transfer has been initiated by a seat belt pretensioner pulling the seat belt 17 in the direction indicated by arrow 18. The seat belt 17 has exerted a force on the coupling means (not shown in Figure 6b) transferring the locking device 5 from the locking position into the release position by rotating the locking device 5 in the direction indicated by arrow 19. Once the locking device 5 has been brought to the release position, the seat member 3 is free to collapse into the collapsed position in the direction indicated by arrow 12 as described in the context of Figures 2a and 2b. Preferably, the transfer of the seat member 3 from the initial position to the collapsed position is supported by biasing means provided in the child safety seat 1. Advantageously, the child safety seat 1 comprises a spring adapted to transfer the seat member 3 from the initial position to the collapsed position. If the locking device 5 is in the locking position, the spring is prevented from transferring the seat member 3 into the collapsed position. Once the locking device 5 is in the release position, the spring is free to transfer the seat member 3 from the initial position to the collapsed position.

Advantageously, the child safety seat 1 comprises a control logic which is adapted to detect misuse. In particular, the control logic may be adapted to distinguish between different pulling events of the seat belt 17. Preferably, the control logic is adapted to detect whether the seat belt 17 is being tensioned by a seat belt pretensioner or if the seat belt 17 is being tensioned manually. Basis of this detection may be the speed at which the seat belt 17 is being pulled. If the control logic detects tensioning of the seat belt 17 by a seat belt pretensioner, the control logic will allow the coupling means to transfer the locking device 5 from the locking position to the release position. If the control logic detects manual tensioning of the seat belt 17, however, the control logic will not allow the coupling means to transfer the locking device 5 from the locking position to the release position. Therefore, the control logic can prevent misuse of the child safety seat 1 such as a user's manual pulling on the seat belt 17 resulting in a collapse of the seat member 3 from the initial position to the collapsed position.

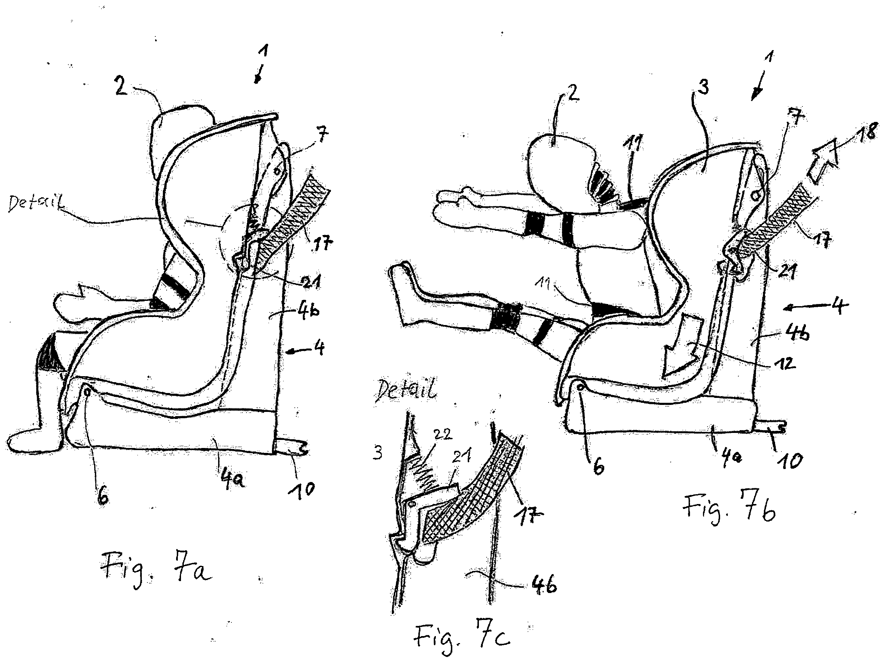

Figure 7a, 7b and 7c are directed to the fifth embodiment of the invention according to which the seatbelt 17 is coupled by means of a coupling component 21 to the rear side of the seat 3. The key function of the fifth embodiment according to figures 7a to 7c is the activating of the transfer of the seat from an initial position to the collapsed position by detecting that the pretensioner of the seat belt 17 is pulling the seat belt 17 in direction 18. Once the predefined length of the pretensioning in direction 18 occurs, the seat belt 17 which is coupled in the coupling element 21 will be moved from its initial position. The move or displacement of the coupling component 21 will cause in the detecting element 21 a signal or will immediately activate the transfer for the change of the seat position. The coupling component 21 according to figure 7c comprises a clip which holds firmly a part of the seat belt 17. The coupling component 21 is attached to the rear side of the seat 3 by means of a mechanical or magnetic element or another way of a releasable connection. Attached to the coupling component 21 is a detecting element 22 which functions as transmitter or sensor for the connection of the coupling component 21 and the seat 3. There a numerous other ways to detect that the coupling component 21 was moved by the seat belt 1 7. According to figure 7c the detecting element 22 is made of a spring element which will be pulled out of a housing to detect the move of coupling component 21.

### List of reference numerals:

- 1: child safety seat
- 2: child
- 3: seat member
- 4: base member
- 4a: lower part of base member 4
- 4b: upper part of base member 4
- 5: locking device
- 5a: first component of locking device 5
- 5b: second component of locking device 5
- 6: first joint
- 7: second joint
- 8: pivotable element
- 9: articulated joint in base member
- 10: ISOFIX latch
- 11: harness
- 12: direction of collapse
- 13: centre of mass
- 14: ISOFIX anchorage
- 15: vehicle seat
- 16: crash-induced force
- 16a: first component of crash-induced force
- 16b: second component of crash-induced force
- 17: seat belt
- 18: direction of seat belt pretensioner action
- 19: unlocking direction
- 20: zone for inserting energy absorbing member
- 21: coupling component
- 22: detecting element
- 51: first zone of locking device
- 52: second zone of locking device
- 53: third zone of locking device
- 55: elongate slot of first component 5a of locking device 5

## Claims

1. A child safety seat (1) for use in a vehicle, the child safety seat (1) comprising:
- a seat member (3) configured to hold a child (2),
- a base member (4) adapted to be attached to a seat (15) of the vehicle, and
- a locking device (5),
wherein the seat member (3) is movably mounted to the base member (4) in such a way
to allow the seat member (3) to be transferred from an initial position to a collapsed position by moving the seat member (3) towards the base member (4) and in such a way
that crash-induced forces acting on the child safety seat (1) during a frontal collision of the vehicle tend to transfer the seat member (3) from the initial position to the collapsed position, wherein
the locking device (5) is configured to lock the seat member (3) in the initial position and wherein the locking device (5) is designed and arranged to release the seat member (3) from the initial position if the crash-induced forces reach or exceed a given threshold value.

2. The child safety seat (1) of claim 1, wherein the seat member (3) is pivotally mounted to the base member (4) by a first joint (6).

3. The child safety seat (1) of claim 1 or 2, wherein the child safety seat (1) is configured for forward-facing installation in the vehicle and wherein the seat member (3) is configured to be pivoted towards the base member (4) about an axis which is located in the front half of the base member (4).

4. The child safety seat (1) of any one of the previous claims, furthermore comprising a deformable energy absorbing element which is arranged to be deformed when the seat member (3) is transferred from the initial position to the reclined position.

5. The child safety seat (1) of claim 4, wherein the deformable energy absorbing member comprises a honeycomb structure.

6. The child safety seat (1) of any one of the previous claims, wherein the base member (4) comprises a lower part (4a) and an upper part (4b) and the seat member (3) comprises a backrest, wherein the backrest of the seat member (3) is slidably coupled to the upper part (4b) of the base member (4) by a second joint (7).

7. The child safety seat (1) of any one of the previous claims, wherein the locking device (5) comprises a first component (5a) and a second component (5b) which are configured to be moveable relative to each other.

8. The child safety seat (1) of claim 7, wherein the locking device (5) is configured to adopt one of two distinct configurations, a first configuration or a second configuration, wherein in the first configuration the second component (5b) is configured to adopt a first position relative to the first component (5a) and in the second configuration the second component (5b) is configured to adopt a second position relative to the first component (5a), wherein the locking device (5) adopts the first configuration when the seat member (3) is in the initial position and wherein the locking device (5) adopts the second configuration when the seat member (3) is in the collapsed position.

9. The child safety seat (1) of claim 7 or 8, wherein the first component (5a) of the locking device (5) is fixedly attached to the seat member (3) and wherein the second component (5b) of the locking device (5) is fixedly attached to the base member (4).

10. The child safety seat (1) of any one of claims 2 to 9, wherein the base member (4) comprises a pivotable element (8) configured to be pivoted about an articulated joint (9) provided in the base member (4) and wherein the first joint (6) is provided on the pivotable element (8).

11. The child safety seat (1) of claim 10, wherein the first component (5a) of the locking device (5) is fixedly attached to the seat member (3) and wherein the second component (5b) of the locking device (5) is fixedly attached to the pivotable element (8).

12. The child safety seat (1) of claim 10 or 11, wherein the first joint (6), the second joint (7), the pivotable element (8), and the articulated joint (9) are arranged and designed to guide the seat member (3) during the transfer from the initial position to the collapsed position in such a way that the seat member (3) is lowered and rotated towards the back of the vehicle.

13. The child safety seat (1) of any one of the previous claims, wherein transfer of the seat member (3) from the initial position to the collapsed position is configured to be triggered by actuation of a seat belt (17) provided in the vehicle.

14. The child safety seat (1) of claim 13, furthermore comprising coupling means configured for releasable attachment of a portion of the seat belt (1 7) to the coupling means, wherein the locking device (5) is configured to adopt a locking position locking the seat member (3) in the initial position or a release position allowing transfer of the seat member (3) from the initial position to the collapsed position, wherein transfer of the locking device (5) from the locking position to the release position is configured to be triggered by the seat belt (17) exerting a force on the coupling means, the force being applied to the seat belt (17) by a seat belt pretensioner of the vehicle.

15. The child safety seat (1) of any one of the previous claims, wherein the base member (4) comprises a latch (10) adapted for releasable attachment of the child safety seat (1) to a anchorage (14) provided in the vehicle.

16. A child safety seat (1) for use in a vehicle, the child safety seat (1) comprising:
- a seat member (3) configured to hold a child (2),
- a base member (4) adapted to be attached to a seat (15) of the vehicle, and
- a locking device (5),
wherein the seat member (3) is movably mounted to the base member (4) in such a way
to allow the seat member (3) to be transferred from an initial position to a collapsed position by moving the seat member (3) towards the base member (4) and in such a way
that crash-induced forces acting on the child safety seat (1) during a frontal collision of the vehicle tend to transfer the seat member (3) from the initial position to the collapsed position, upon receiving a predefined signal from a belt pretensioner.

17. The child safety seat (1) according to claim 16, wherein the predefined signal derives from a sensor which utilizes optical, mechanical and/or electrical functionality and is operatively connected via wire/wireless connection to the car and/or seat (1).

18. The child safety seat (1) according to any of the previous claims, wherein a coupling element (21) for coupling the seat belt is provided which is operatively connected to a detecting element (22) which is able to detect a displacement of the coupling element (21).

## Patentansprüche

1. Kindersitz (1) zur Verwendung in einem Fahrzeug, wobei der Kindersitz (1) aufweist:
- ein Sitzteil (3), das dazu konfiguriert ist, ein Kind (2) zu halten,
- ein Basisteil (4), das dazu ausgelegt ist, an einem Sitz (15) des Fahrzeugs befestigt zu werden, und
- eine Verriegelungsvorrichtung (5),
wobei das Sitzteil (3) an dem Basisteil (4) derart beweglich angebracht ist, dass es dem Sitzteil (3) ermöglicht wird, von einer Anfangsposition in eine kollabierte Position überführt zu werden, indem das Sitzteil (3) in Richtung des Basisteils (4) bewegt wird, und derart, dass aufprallinduzierte Kräfte, die während einer Frontalkollision des Fahrzeugs auf den Kindersitz (1) wirken, dazu neigen, das Sitzteil (3) von der Anfangsposition in die kollabierte Position zu überführen, wobei
die Verriegelungsvorrichtung (5) dazu konfiguriert ist, das Sitzteil (3) in der Anfangsposition zu verriegeln, und wobei die Verriegelungsvorrichtung (5) dazu ausgelegt und angeordnet ist, das Sitzteil (3) aus der Anfangsposition freizugeben, wenn die aufprallinduzierten Kräfte einen vorgegebenen Schwellenwert erreichen oder übersteigen.

2. Kindersitz (1) nach Anspruch 1, wobei das Sitzteil (3) durch ein erstes Gelenk (6) schwenkbar an dem Basisteil (4) angebracht ist.

3. Kindersitz (1) nach Anspruch 1 oder 2, wobei der Kindersitz (1) zur nach vorne weisenden Anbringung in dem Fahrzeug konfiguriert ist, und wobei das Sitzteil (3) dazu konfiguriert ist, um eine Achse, die sich in der vorderen Hälfte des Basisteils (4) befindet, in Richtung des Basisteils (4) geschwenkt zu werden.

4. Kindersitz (1) nach einem der vorhergehenden Ansprüche, der des Weiteren ein verformbares energieabsorbierendes Element aufweist, das dazu ausgelegt ist, verformt zu werden, wenn das Sitzteil (3) von der Anfangsposition in die nach hinten verstellte Position überführt wird.

5. Kindersitz (1) nach Anspruch 4, wobei das verformbare energieabsorbierende Element eine Wabenstruktur aufweist.

6. Kindersitz (1) nach einem der vorhergehenden Ansprüche, wobei das Basisteil (4) einen unteren Teil (4a) und einen oberen Teil (4b) aufweist und das Sitzteil (3) eine Rückenlehne aufweist, wobei die Rückenlehne des Sitzteils (3) durch ein zweites Gelenk (7) gleitend mit dem oberen Teil (4b) des Basisteils (4) verbunden ist.

7. Kindersitz (1) nach einem der vorhergehenden Ansprüche, wobei die Verriegelungsvorrichtung (5) eine erste Komponente (5a) und eine zweite Komponente (5b) aufweist, die dazu konfiguriert sind, in Bezug zueinander bewegbar zu sein.

8. Kindersitz (1) nach Anspruch 7, wobei die Verriegelungsvorrichtung (5) dazu konfiguriert ist, eine von zwei unterschiedlichen Konfigurationen, einer ersten Konfiguration und einer zweiten Konfiguration, einzunehmen, wobei in der ersten Konfiguration die zweite Komponente (5b) dazu konfiguriert ist, eine erste Position in Bezug zu der ersten Komponente (5a) einzunehmen, und in der zweiten Konfiguration die zweite Komponente (5b) dazu konfiguriert ist, eine zweite Position in Bezug zu der ersten Komponente (5a) einzunehmen, wobei die Verriegelungsvorrichtung (5) die erste Konfiguration einnimmt, wenn sich das Sitzteil (3) in der Anfangsposition befindet, und wobei die Verriegelungsvorrichtung (5) die zweite Konfiguration einnimmt, wenn sich das Sitzteil (3) in der kollabierten Konfiguration befindet.

9. Kindersitz (1) nach Anspruch 7 oder 8, wobei die erste Komponente (5a) der Verriegelungsvorrichtung (5) fest an dem Sitzteil (3) befestigt ist, und wobei die zweite Komponente (5b) der Verriegelungsvorrichtung (5) fest an dem Basisteil (4) befestigt ist.

10. Kindersitz (1) nach einem der Ansprüche 2 bis 9, wobei das Basisteil (4) ein schwenkbares Element (8) aufweist, das dazu konfiguriert ist, um ein Knickgelenk (9) schwenkbar zu sein, das in dem Basisteil (4) vorgesehen ist, und wobei das erste Gelenk (6) an dem schwenkbaren Element (8) vorgesehen ist.

11. Kindersitz (1) nach Anspruch 10, wobei die erste Komponente (5a) der Verriegelungsvorrichtung (5) fest an dem Sitzteil (3) befestigt ist, und wobei die zweite Komponente (5b) der Verriegelungsvorrichtung (5) fest an dem schwenkbaren Element (8) befestigt ist.

12. Kindersitz (1) nach Anspruch 10 oder 11, wobei das erste Gelenk (6), das zweite Gelenk (7), das schwenkbare Element (8) und das Knickgelenk (9) dazu angeordnet und ausgelegt sind, das Sitzteil (3) während des Überführens von der Anfangsposition in die kollabierte Position derart zu führen, dass das Sitzteil (3) abgesenkt und in Richtung der Rückseite des Fahrzeugs gedreht wird.

13. Kindersitz (1) nach einem der vorhergehenden Ansprüche, wobei das Überführen des Sitzteils (3) von der Anfangsposition in die kollabierte Position dazu konfiguriert ist, durch Betätigung eines in dem Fahrzeug vorgesehenen Sitzgurts (17) ausgelöst zu werden.

14. Kindersitz (1) nach Anspruch 13, der des Weiteren Kopplungsmittel aufweist, die zur lösbaren Befestigung eines Teils des Sitzgurts (17) an den Kopplungsmitteln konfiguriert sind, wobei die Verriegelungsvorrichtung (5) dazu konfiguriert ist, eine Verriegelungsposition einzunehmen, die das Sitzteil (3) in der Anfangsposition verriegelt, oder eine Freigabeposition, die das Überführen des Sitzteils (3) von der Anfangsposition in die kollabierte Position ermöglicht, wobei das Überführen der Verriegelungsvorrichtung (5) von der Verriegelungsposition in die Freigabeposition dazu konfiguriert ist, dadurch ausgelöst zu werden, dass der Sitzgurt (17) eine Kraft auf die Kopplungsmittel ausübt, wobei die Kraft auf den Sitzgurt (17) durch einen Sitzgurtstraffer des Fahrzeugs ausgeübt wird.

15. Kindersitz (1) nach einem der vorhergehenden Ansprüche, wobei das Basisteil (4) einen Riegel (10) aufweist, der zur lösbaren Befestigung des Kindersitzes (1) an einer in dem Fahrzeug vorgesehenen Verankerung (14) ausgelegt ist.

16. Kindersitz (1) zur Verwendung in einem Fahrzeug, wobei der Kindersitz (1) aufweist:
- ein Sitzteil (3), das dazu konfiguriert ist, ein Kind (2) zu halten,
- ein Basisteil (4), das dazu ausgelegt ist, an einem Sitz (15) des Fahrzeugs befestigt zu werden, und
- eine Verriegelungsvorrichtung (5),
wobei das Sitzteil (3) an dem Basisteil (4) derart beweglich angebracht ist, dass es dem Sitzteil (3) ermöglicht wird, von einer Anfangsposition in eine kollabierte Position überführt zu werden, indem das Sitzteil (3) in Richtung des Basisteils (4) bewegt wird, und derart, dass aufprallinduzierte Kräfte, die während einer Frontalkollision des Fahrzeugs auf den Kindersitz (1) wirken, dazu neigen, das Sitzteil (3) von der Anfangsposition in die kollabierte Position zu überführen, nach Empfang eines vordefinierten Signals von einem Gurtspanner.

17. Kindersitz (1) nach Anspruch 16, wobei das vordefinierte Signal von einem Sensor stammt, der optische, mechanische und/oder elektrische Funktionalität verwendet und über verdrahtete/drahtlose Verbindung betriebsbereit mit dem Fahrzeug und/oder dem Sitz (1) verbunden ist.

18. Kindersitz (1) nach einem der vorhergehenden Ansprüche, wobei ein Kopplungselement (21) zum Koppeln des Sitzgurts vorgesehen ist, das betriebsbereit mit einem Detektierelement (22) verbunden ist, welches dazu in der Lage ist, eine Verlagerung des Kopplungselements (21) festzustellen.

## Revendications

1. Siège de sécurité pour enfant (1) destiné à être utilisé dans un véhicule, le siège de sécurité pour enfant (1) comprenant :
- un élément de siège (3) configuré pour recevoir un enfant (2),
- un élément de base (4) adapté pour être fixé à un siège (15) du véhicule, et
- un dispositif de verrouillage (5),
dans lequel l'élément de siège (3) est monté mobile sur l'élément de base (4) de manière à permettre à l'élément de siège (3) d'être transféré d'une position initiale à une position repliée en déplaçant l'élément de siège (3) vers l'élément de base (4) et de telle manière que les forces induites par un accident agissant sur le siège de sécurité pour enfant (1) lors d'une collision frontale du véhicule tendent à transférer l'élément de siège (3) de la position initiale à la position repliée, dans lequel
le dispositif de verrouillage (5) est configuré pour verrouiller l'élément de siège (3) dans la position initiale et dans lequel le dispositif de verrouillage (5) est conçu et agencé pour libérer l'élément de siège (3) de la position initiale si les forces induites par un accident atteignent ou dépassent une valeur seuil donnée.

2. Siège de sécurité pour enfant (1) selon la revendication 1, dans lequel l'élément de siège (3) est monté pivotant sur l'élément de base (4) par une première articulation (6).

3. Siège de sécurité pour enfant (1) selon la revendication 1 ou 2, dans lequel le siège de sécurité pour enfant (1) est configuré pour une installation face à la route dans le véhicule et dans lequel l'élément de siège (3) est configuré pour pivoter vers l'élément de base (4) autour d'un axe qui est situé dans la moitié avant de l'élément de base (4).

4. Siège de sécurité pour enfant (1) selon l'une quelconque des revendications précédentes, comprenant en outre un élément absorbant l'énergie déformable qui est agencé pour être déformé lorsque l'élément de siège (3) est transféré de la position initiale à la position inclinée.

5. Siège de sécurité pour enfant (1) selon la revendication 4, dans lequel l'élément absorbant l'énergie déformable comprend une structure en nid d'abeille.

6. Siège de sécurité pour enfant (1) selon l'une quelconque des revendications précédentes, dans lequel l'élément de base (4) comprend une partie inférieure (4a) et une partie supérieure (4b) et l'élément de siège (3) comprend un dossier, dans lequel le dossier de l'élément de siège (3) est accouplé de manière coulissante à la partie supérieure (4b) de l'élément de base (4) par une deuxième articulation (7).

7. Siège de sécurité pour enfant (1) selon l'une quelconque des revendications précédentes, dans lequel le dispositif de verrouillage (5) comprend un premier composant (5a) et un deuxième composant (5b) qui sont configurés pour être mobiles l'un par rapport à l'autre.

8. Siège de sécurité pour enfant (1) selon la revendication 7, dans lequel le dispositif de verrouillage (5) est configuré pour adopter l'une de deux configurations distinctes, une première configuration ou une seconde configuration, dans lequel dans la première configuration le deuxième composant (5b) est configuré pour adopter une première position par rapport au premier composant (5a) et dans la seconde configuration le deuxième composant (5b) est configuré pour adopter une deuxième position par rapport au premier composant (5a), dans lequel le dispositif de verrouillage (5) adopte le première configuration lorsque l'élément de siège (3) est dans la position initiale et dans lequel le dispositif de verrouillage (5) adopte la seconde configuration lorsque l'élément de siège (3) est dans la position repliée.

9. Siège de sécurité pour enfant (1) selon la revendication 7 ou 8, dans lequel le premier composant (5a) du dispositif de verrouillage (5) est attaché de manière fixe à l'élément de siège (3) et dans lequel le deuxième composant (5b) du dispositif de verrouillage (5) est attaché de manière fixe à l'élément de base (4).

10. Siège de sécurité pour enfant (1) selon l'une quelconque des revendications 2 à 9, dans lequel l'élément de base (4) comprend un élément pivotant (8) configuré pour pivoter autour d'une jonction articulée (9) prévue dans l'élément de base (4) et dans lequel la première articulation (6) est prévue sur l'élément pivotant (8).

11. Siège de sécurité pour enfant (1) selon la revendication 10, dans lequel le premier composant (5a) du dispositif de verrouillage (5) est attaché de manière fixe à l'élément de siège (3) et dans lequel le deuxième composant (5b) du dispositif de verrouillage (5) est attaché de manière fixe à l'élément pivotant (8).

12. Siège de sécurité pour enfant (1) selon la revendication 10 ou 11, dans lequel la première articulation (6), la deuxième articulation (7), l'élément pivotant (8) et la jonction articulée (9) sont agencés et conçus pour guider l'élément de siège (3) pendant le transfert de la position initiale à la position repliée de telle manière que l'élément de siège (3) soit abaissé et tourné vers l'arrière du véhicule.

13. Siège de sécurité pour enfant (1) selon l'une quelconque des revendications précédentes, dans lequel le transfert de l'élément de siège (3) de la position initiale à la position repliée est configuré pour être déclenché par l'actionnement d'une ceinture de sécurité (17) prévue dans le véhicule.

14. Siège de sécurité pour enfant (1) selon la revendication 13, comprenant en outre un moyen d'accouplement configuré pour une fixation amovible d'une partie de la ceinture de sécurité (17) au moyen d'accouplement, dans lequel le dispositif de verrouillage (5) est configuré pour adopter une position de verrouillage verrouillant l'élément de siège (3) dans la position initiale ou une position de libération permettant le transfert de l'élément de siège (3) de la position initiale à la position repliée, dans lequel le transfert du dispositif de verrouillage (5) de la position de verrouillage à la position de libération est configuré pour être déclenché par la ceinture de sécurité (17) exerçant une force sur le moyen d'accouplement, la force étant appliquée à la ceinture de sécurité (17) par un prétendeur de ceinture de sécurité du véhicule.

15. Siège de sécurité pour enfant (1) selon l'une quelconque des revendications précédentes, dans lequel l'élément de base (4) comprend un verrou (10) adapté pour une fixation amovible du siège de sécurité pour enfant (1) à un ancrage (14) prévu dans le véhicule.

16. Siège de sécurité pour enfant (1) destiné à être utilisé dans un véhicule, le siège de sécurité pour enfant (1) comprenant :
- un élément de siège (3) configuré pour recevoir un enfant (2),
- un élément de base (4) adapté pour être fixé à un siège (15) du véhicule, et
- un dispositif de verrouillage (5),
dans lequel l'élément de siège (3) est monté mobile sur l'élément de base (4) de manière à permettre à l'élément de siège (3) d'être transféré d'une position initiale à une position repliée en déplaçant l'élément de siège (3) vers le élément de base (4) et de telle manière que les forces induites par un accident agissant sur le siège de sécurité pour enfant (1) lors d'une collision frontale du véhicule tendent à transférer l'élément de siège (3) de la position initiale à la position repliée, lors de la réception d'un signal prédéfini d'un prétendeur de ceinture.

17. Siège de sécurité pour enfant (1) selon la revendication 16, dans lequel le signal prédéfini dérive d'un capteur qui utilise une fonctionnalité optique, mécanique et/ou électrique et est fonctionnellement connecté via une connexion filaire/sans fil à la voiture et/ou au siège (1).

18. Siège de sécurité pour enfant (1) selon l'une quelconque des revendications précédentes, dans lequel un élément d'accouplement (21) pour accoupler la ceinture de sécurité est prévu qui est relié fonctionnellement à un élément de détection (22) qui est capable de détecter un déplacement de l'élément d'accouplement (21).
